# FASCICULE DE BREVET EUROPEEN

(11) **EP 4 373 765 B1**
(45) Date de publication et mention de la délivrance du brevet: **10.09.2025**
(21) Numéro de dépôt: 22744223.3
(22) Date de dépôt: 20.07.2022
(51) Int. Cl.: B65G 1/02, B65G 1/04, B65G 1/06, B65G 1/137

(54) **SYSTEME DE PREPARATION DE COMMANDES OU DE STOCKAGE TAMPON**
SYSTEM ZUR VORBEREITUNG VON BESTELLUNGEN ODER ZUM SPEICHERN EINES PUFFERSPEICHERS
ORDER PREPARATION OR BUFFER STORAGE SYSTEM

(30) Priorité: 21.07.2021 FR 2107880
(43) Date de publication de la demande: 29.05.2024
(73) Titulaire: Exotec Product France, 59170 Croix (FR)
(72) Inventeur: LEROUGE, Alexis, 59260 HELLEMMES (FR); LEPILLIER, Loïc, 59290 WASQUEHAL (FR)
(74) Mandataire: Plasseraud IP
(86) Numéro de dépôt international: PCT/EP2022/070406
(87) Numéro de publication internationale: WO 2023/001915

(56) Documents cités:
- WO-A1-2020/156026
- CN-A- 108 726 064
- CN-A- 110 606 315
- CN-A- 110 775 502
- US-B2- 10 822 169

## Description

### 1. Domaine de l'invention

Le domaine de l'invention est celui de la logistique en entrepôt et en particulier de la manutention, du stockage et du transport de pièces ou de produits.

Plus précisément, l'invention concerne un système de préparation de commandes ou de stockage tampon.

L'invention trouve notamment une application dans l'automatisation de la gestion des flux d'un entrepôt de stockage, par exemple dans un entrepôt de préparation de commandes d'une chaîne logistique, ou dans l'automatisation d'un service de livraison de commandes en point-retrait, communément appelé « drive ».

### 2. Etat de la technique

Dans la chaîne logistique globale, la gestion des flux et la manipulation des produits au sein d'un entrepôt jouent un rôle déterminant.

Traditionnellement, un préparateur de commandes se déplace dans l'entrepôt pour collecter chaque produit d'une commande à son emplacement sur une étagère d'un rayonnage.

On constate qu'une telle organisation implique que le préparateur parcoure de longs trajets au cours d'une journée de travail, ce qui occasionne fatigue et perte de temps lorsque le trajet n'est pas optimisé.

Un autre inconvénient est que le préparateur doit parfaitement connaître l'agencement de l'entrepôt pour ne pas perdre de temps.

Pour limiter la fatigue due aux déplacements, améliorer la gestion de la cueillette (ou « picking » en anglais), réduire le temps de préparation des commandes et son coût, on a imaginé une organisation des entrepôts où les produits sont prélevés dans les rayonnages par des robots puis acheminés par ces mêmes robots jusqu'à des postes de préparation de commandes.

On a notamment proposé de mettre en œuvre des chariots autoguidés qui sont à la fois capables de rouler sur le sol et de grimper le long des rayonnages pour aller prélever des produits stockés dans des bacs.

On connaît ainsi, par exemple, du document WO 2010/100513 A2 ou du document WO 2017/064401 A1, du document CN108726064 A ou du document US10822169 B2, un robot équipé sur les côtés de son châssis de roues dentées rétractables pouvant se déployer latéralement. Ces roues dentées sont destinées à s'engrener sur des crémaillères ou des chaînes verticales fixées à des montants des rayonnages, pour permettre au robot de s'élever entre deux rayonnages afin de parvenir jusqu'au niveau d'un bac à prélever. Le robot est par ailleurs pourvu de contre-roues pour guider le robot dans sa progression et prévenir une chute du robot. Plus particulièrement, US 10 822 169 B2 divulgue un système selon le préambule de la revendication1.

Un inconvénient de ces techniques connues de robot est que lorsqu'un bras portant l'une des roues dentées se casse et que le robot tend à s'affaisser, la ou les contre-roues qui retiennent sa chute vont exercer une torsion sur les montants, ce qui déforme ceux-ci. Les montants déformés doivent alors être remplacés, ce qui nécessite une intervention lourde sur les rayonnages et peut entrainer l'arrêt du système de préparation de commandes pendant une longue période.

### 3. Objectifs de l'invention

L'invention a donc notamment pour objectif de pallier les inconvénients de l'état de la technique cités ci-dessus.

Plus précisément, l'invention a pour objectif de fournir un système de préparation de commandes mettant en œuvre des robots apte à grimper sur des rayonnages, qui ne nécessite pas d'être mis à l'arrêt de façon prolongée en cas de défaillance mécanique du système de grimpe d'un robot.

Un autre objectif de l'invention est de fournir une technique de préparation de commandes qui soit fiable et simple à mettre en œuvre.

Un objectif de l'invention est également de fournir une technique de préparation de commandes qui soit peu coûteuse.

### 4. Exposé de l'invention

Ces objectifs, ainsi que d'autres qui apparaîtront par la suite sont atteints à l'aide d'un système, tel qu'un système de préparation de commandes ou un système de stockage tampon, comprenant :
- un premier rayonnage et un deuxième rayonnage, ledit premier rayonnage et ledit deuxième rayonnage délimitant une allée ;
- une première paire de montants solidarisée audit premier rayonnage et une deuxième paire de montants solidarisée audit deuxième rayonnage, les montants de ladite première paire de montants étant montés chacun en vis-à-vis d'un montant de ladite deuxième paire de montants;
- au moins un chariot à guidage automatique destiné à prélever des objets dans au moins un desdits rayonnages, ledit chariot comprenant des moyens de grimpe motorisés aptes à coopérer avec lesdits montants de sorte à permettre audit chariot de s'élever le long desdits montants, lesdits moyens de grimpe comprenant quatre roues dentées destinées chacune à coopérer avec des crémaillères ou des chaînes solidarisées auxdits montants de ladite première paire et de ladite deuxième paire de montants,

chacune des roues dentées étant montée sur un support mobile par rapport au châssis dudit chariot entre deux positions :
   - une position déployée, dans laquelle au moins une partie de ladite roue dentée montée sur ledit support fait saillie hors dudit châssis ;
   - une position escamotée, dans laquelle la roue dentée montée sur ledit support est logée dans ou au-dessus dudit châssis,
ledit chariot comprenant des moyens d'entrainement en rotation desdites roues dentées et lesdits supports mobiles comprenant des moyens de solidarisation avec lesdits montants comprenant une contre-roue montée sur chacun desdits supports, chacune desdites contre-roues étant destinée à rouler sur une face d'un desdits montants opposée à la face desdits montants à laquelle est solidarisée ladite crémaillère ou ladite chaine.

Selon l'invention, un patin est fixé sensiblement à une extrémité distale de chacun desdits supports, lesdits patins s'étendant sensiblement verticalement, ledit patin et ladite contre-roue d'un même support mobile étant positionnés l'un par rapport à l'autre sur ledit support de sorte que lorsque lesdits moyens d'entrainement engrènent la roue dentée montée sur ce même support mobile avec la crémaillère ou la chaîne d'un desdits montants, ladite contre-roue est en contact avec ladite face opposée de ce montant et ledit patin est écarté de ce montant et que lorsque ledit chariot est grimpé sur lesdits montants et que ladite roue dentée peut tourner librement suite à une défaillance desdits moyens d'entrainement, entrainant un affaissement dudit support mobile, ledit patin vient en appui sur une portion de la face dudit montant à laquelle est solidarisée une crémaillère (26) ou une chaine de sorte à stopper la progression vers le bas dudit support mobile.

Ainsi, de façon inédite, l'invention propose de mettre en œuvre des patins judicieusement positionnés par rapport aux contre-roues, afin de bloquer la descente du chariot sans déformer les montants.

De préférence, lesdits montants de ladite première paire et de ladite deuxième paire de montants présentent un profil en oméga, ou un profil de cornière dont au moins une aile présente un bord rabattu, chacun desdits patins est tourné en direction desdits rayonnages lorsque ledit chariot est engagé dans ladite allée, et la portion de la face dudit montant à laquelle est solidarisée une crémaillère ou une chaine, et sur laquelle un patin peut venir en appui, est une portion de la face tournée vers ladite allée d'un bord rabattu d'un montant.

Alternativement, lesdits montants de ladite première paire et de ladite deuxième paire de montants peuvent présenter un profil en forme de U et la portion de la face dudit montant à laquelle est solidarisée une crémaillère ou une chaine, et sur laquelle un patin peut venir en appui, peut être une portion d'une face d'une aile d'un des montants qui s'étend perpendiculairement à ladite allée.

De préférence, lesdits patins sont montés sur lesdits supports à une hauteur supérieure à celle desdites contre-roues.

Plus particulièrement, lorsque lesdits moyens d'entrainement engrènent une roue dentée montée sur un support mobile avec la crémaillère ou la chaîne d'un desdits montants, la distance projetée sur l'horizontale entre la surface extérieure du patin fixé sur le même support mobile et l'axe la contre-roue montée sur le même mobile est supérieure au cumul de la valeur du rayon de la contre-roue et de l'épaisseur d'une aile de ce montant.

Ainsi, le patin ne frotte pas sur le montant lorsque le chariot fonctionne convenablement.

De façon avantageuse, lesdits patins comprennent un bloc en matière élastomère, et de préférence en polyuréthane.

Avantageusement, ledit bloc est logé dans une bague.

Optionnellement, la largeur ou la longueur dudit chariot est inférieure à l'espacement entre les montants de ladite première paire de montant ou de ladite deuxième paire de montants, et en ce que ledit support mobile est configuré de sorte que, dans ladite position déployée, au moins une partie de chacune desdites roues dentées fait également saillie hors d'un bord dudit châssis faisant face à ladite allée.

Ainsi, les roues dentées pouvant se déployer à la fois sur les côtés mais aussi sur l'avant ou sur l'arrière du chariot, celui-ci peut à la fois de grimper sur des rayonnages, mais aussi circuler sous les rayonnages, ce qui permet d'optimiser le trajet des chariots, et notamment de réduire la distance parcourue au sol par les chariots et d'éviter les risques de conflits de circulation entre deux chariots en multipliant significativement les possibilités de parcours alternatifs, et in fine d'augmenter grandement le flux de préparation de commandes dans un entrepôt ou le nombre de marchandises pouvant être stockées, ou déstockées, par heure dans une installation de stockage tampon. En outre, grâce à l'invention, deux chariots peuvent grimper entre le premier rayonnage et le deuxième rayonnage dans des cheminées verticales contiguës, délimitées chacune par une première paire de montants solidarisée au premier rayonnage et une deuxième paire de montants solidarisée au deuxième rayonnage, en vis-à-vis l'une de l'autre, qui partagent un montant commun pour chaque rayonnage.

Dans un mode de réalisation particulier de l'invention, lorsque ledit chariot est engagé dans ladite allée, les axes desdites roues dentées sont parallèles à l'axe de ladite allée.

Avantageusement, lesdits supports mobiles sont montés pivotants et/ou coulissants par rapport audit châssis.

Dans un mode de réalisation particulier de l'invention, lesdits supports mobiles sont montés sensiblement aux quatre coins du châssis dudit chariot.

Optionnellement, lesdits moyens d'entrainement comprennent quatre moteurs indépendants destinés chacun à entraîner une desdites roues dentées.

Optionnellement, lesdites crémaillères solidarisées aux montants sont formées monobloc avec ces montants, par exemple par un procédé d'emboutissage.

Avantageusement, chacune des crémaillères ou des chaines solidarisées à un desdits montants s'étend sous ce montant sensiblement jusqu'au sol et en ce qu'un élément de guidage présentant une surface de roulage pour une desdites contre-roues s'étend verticalement le long de la portion inférieure de ladite crémaillère ou de ladite chaine sensiblement du sol jusqu'à hauteur de la base du montant.

Le chariot est ainsi guidé dans sa montée/descente dès qu'il s'élève du sol.

Avantageusement, ledit chariot à guidage automatique est apte à rouler sur le sol.

Optionnellement, lesdits patins sont tournés vers l'extérieur dudit chariot.

Les patins peuvent notamment être tournés perpendiculairement aux côtés du chariot ou vers l'avant ou l'arrière du chariot.

Avantageusement, dans ladite position déployée, au moins une partie de ladite roue dentée montée sur ledit support fait saillie latéralement hors dudit châssis

### 5. Liste des figures

D'autres caractéristiques et avantages de l'invention apparaîtront plus clairement à la lecture de la description suivante d'un mode de réalisation de l'invention, donné à titre de simple exemple illustratif et non limitatif, et des dessins annexés parmi lesquels :
- La figure 1 est une vue schématique, en perspective, d'un entrepôt équipé d'un exemple de mode de réalisation d'un système de préparation de commandes selon l'invention ;
- La figure 2 est une vue en perspective d'un chariot motorisé à guidage automatique du système présenté en référence à la figure 1 grimpant entre deux rayonnages de l'entrepôt ;
- La figure 3 une vue de détail de la zone d'extrémité d'un bras du chariot présenté en référence à la figure 2 ;
- La figure 4 est une vue de dessus de la zone d'extrémité d'un bras du chariot présenté en référence à la figure 2 ;
- La figure 5 est une vue de côté du chariot motorisé présenté en référence la figure 2 à l'arrêt suite à la rupture d'un arbre d'entrainement d'une des roues dentées du chariot située du côté gauche de celui-ci ;
- La figure 6 est une vue de côté de la zone d'extrémité G d'un bras gauche du chariot présenté en référence à la figure 5, qui est solidaire de l'arbre d'entrainement endommagé ;
- La figure 7 est une vue de côté de la zone d'extrémité D d'un bras situé du côté droit du chariot présenté en référence à la figure 5 ;
- La figure 8 est une vue de dessus de la zone d'extrémité du bras gauche du chariot présenté en référence à la figure 5 solidaire de l'arbre d'entrainement endommagé ;
- La figure 9 est une vue de dessus de la zone d'extrémité d'un bras droit du chariot présenté en référence à la figure 5.

### 6. Description détaillée de l'invention

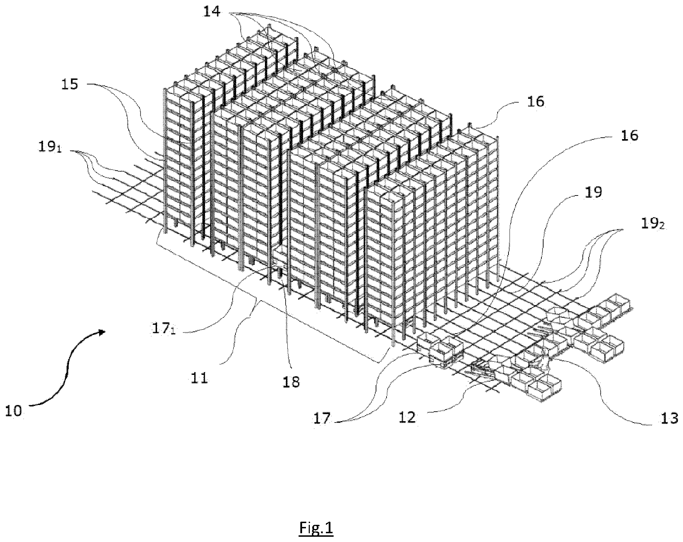

On a illustré sur la figure 1 un entrepôt 10 destiné au stockage de produits en vue de leur expédition. Cet entrepôt est réparti entre une aire de stockage 11 et une zone de préparation de commandes dans laquelle sont disposés des postes de préparation de commandes 12 au niveau desquels des opérateurs 13 préparent des colis avec les produits d'une commande.

L'aire de stockage 11 est organisée en rayonnages 14 comprenant des étagères sur plusieurs niveaux supportées par des montants 15, sur lesquelles sont entreposés des bacs 16 qui contiennent les produits ou articles stockés.

Une flotte de chariots à guidage automatique 17 (« Automatic Guided Vehicle » en anglais) assure le transport des bacs 16 entre l'aire de stockage 11 et les postes de préparation de commandes 12.

Lorsqu'un robot 17 reçoit des informations de localisation d'un bac 16 contenant un ou plusieurs articles à aller prélever pour compléter une commande traitée par un opérateur 13, le robot 17 roule sur le sol jusqu'au pied du rayonnage 14 où est rangé le bac 16 et se positionne dans l'allée 18 entre ce rayonnage 14 et le rayonnage qui lui fait face.

Lors de ce déplacement, le robot 17 suit la direction de bandes tracées au sol organisées selon le schéma d'une grille 19. Comme on peut le voir sur la figure 1, un robot 17 peut ainsi se déplacer dans la direction des bandes longitudinales 19₁ ou des bandes latérales 19₂ perpendiculaires aux bandes 19₁ et peut circuler sous les rayonnages 14.

Ce robot 17 grimpe ensuite, à la manière du robot 17₁ représenté sur la figure 1, en prenant appui sur deux rayonnages jusqu'au niveau de l'étagère où est stocké le bac 16 et l'extrait du rayonnage. Il redescend ensuite entre les deux rayonnages, et une fois au sol, transporte le bac 16 jusqu'au poste de préparation de commandes 12 en cheminant sur la grille 19. L'opérateur 13 n'a plus qu'à prélever la quantité d'articles commandés et les empaqueter.

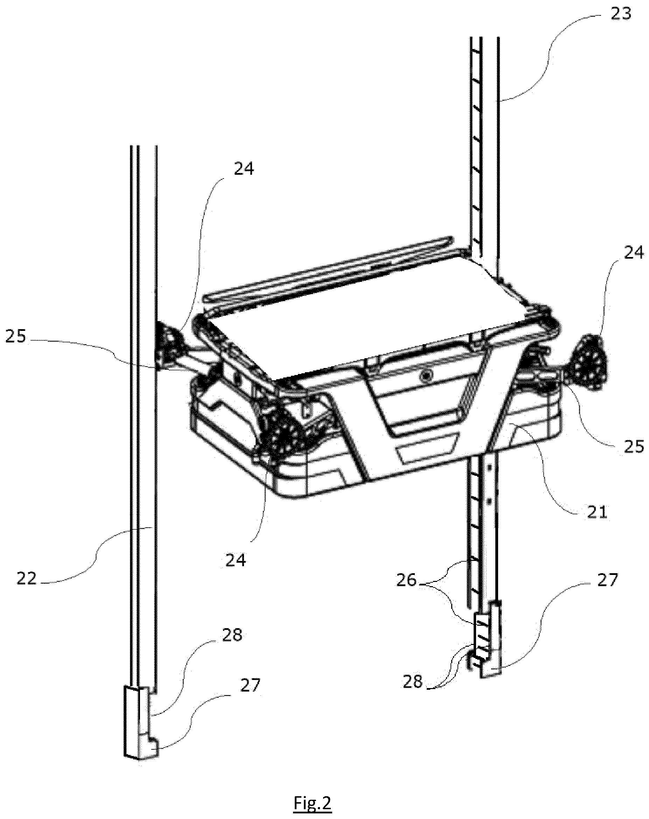

On a représenté sur la figure 2 une vue détaillée d'un robot 21 s'élevant entre deux rayonnages en prenant appui sur deux montants profilés en oméga de chaque rayonnage. Sur la figure 2, seuls les montants 22 et 23 les plus en retrait ont été représentés, par souci de lisibilité.

Pour grimper entre les rayonnages, le robot 21 est équipé au niveau des coins de son châssis de quatre roues dentées 24 montées sur des bras motorisés escamotables 25, qu'il a déployé en les faisant coulisser sensiblement en diagonale hors du châssis jusqu'à ce que les roues dentées 24 puisse entrer en contact et s'engrener avec des crémaillères 26 fixées sur les montants 22 et 23.

Il convient de noter que chacune des crémaillères 26 s'étend sous le montant 22, 23 auquel elle est fixée sensiblement jusqu'au sol. Des supports de guidage 27 enveloppent la portion inférieure des crémaillères s'étendant du sol jusqu'à la base des montants 22, 23. Les bords 28 tournés vers l'allée de ces supports 27 offrent une surface de roulage initiale pour les contre-roues 32 qui équipent chacun des bras 25 du robot, contre lesquels elles viennent en appui, ce qui permet de positionner convenablement les contre-roues dans les premiers centimètres de montée à partir du sol, pour qu'elles puissent ensuite coopérer efficacement avec les montants.

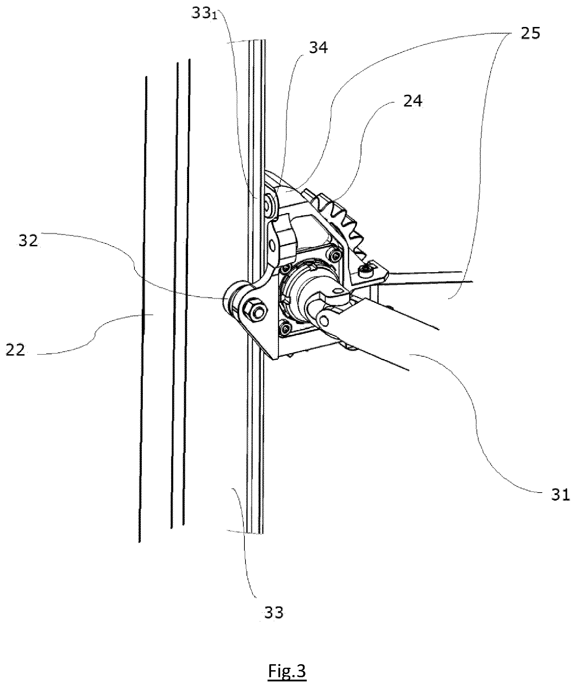

Comme on peut le voir sur la figure 3, qui est une vue de détail de l'extrémité d'un des bras 25, la roue dentée 24 montée sur ce bras 25 est entrainée en rotation par un arbre moteur 31 relié à la roue dentée 24 par l'intermédiaire d'un cardan. Une contre-roue 32 permettant de reprendre une partie du poids du robot et de contrôler l'assiette du robot pour l'empêcher de basculer est fixée à l'extrémité inférieure du bras 25. Cette contre-roue 32 prend appui et roule sur un bord rabattu 33₁ d'une aile 33 du montant 22, sur sa face tournée dans la direction opposée à l'allée séparant les rayonnages.

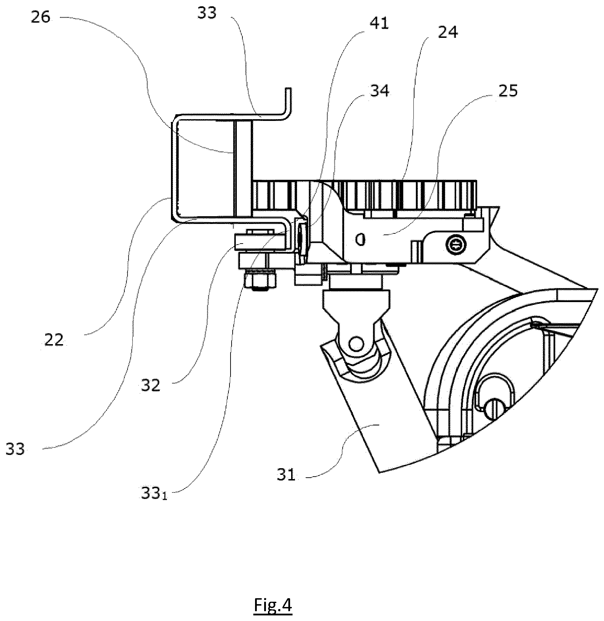

Un patin 34 est par ailleurs fixé sur la partie supérieure du bras 25, à l'extrémité distale de celui-ci, en regard de la face 41 du bord 33₁ tournée vers l'allée, à une distance prédéfinie de la contre-roue 32. Comme on peut le voir sur la figure 4 dans une vue de dessus de la zone d'extrémité du bras 25, le patin 34 ne touche pas le bord rabattu 33₁ lors de la montée/descente du robot 21.

Dans ce mode de réalisation particulier de l'invention, les patins 34 sont formés d'un bloc en polyuréthane logé à l'intérieur d'une bague qui permet de limiter la déformation du bloc.

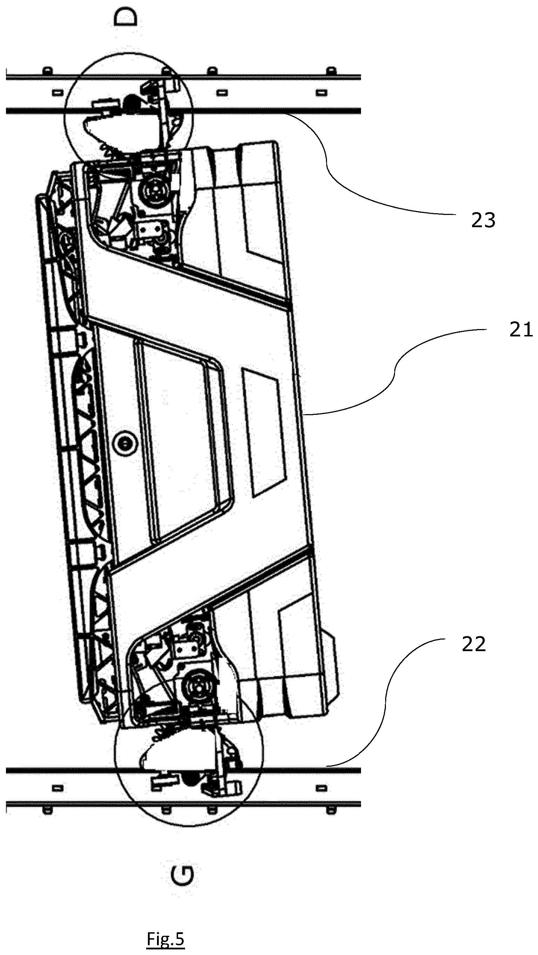

On a représenté le chariot 21 sur la figure 5 après la rupture d'un arbre d'entrainement 31 d'une roue dentée 24 située du côté gauche et à l'avant du chariot 21. La roue dentée 24 avant gauche étant alors libre de tourner librement, le robot 21 s'est affaissée du côté gauche et s'est trouvé bloqué entre les montants 22 et 23, dans la position représentée sur la figure 5.

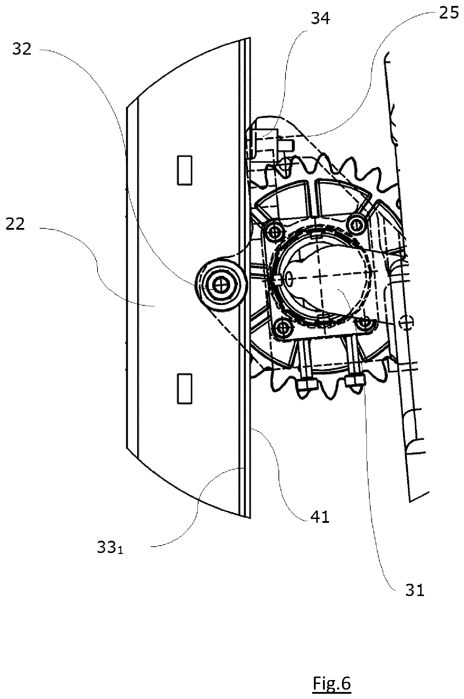

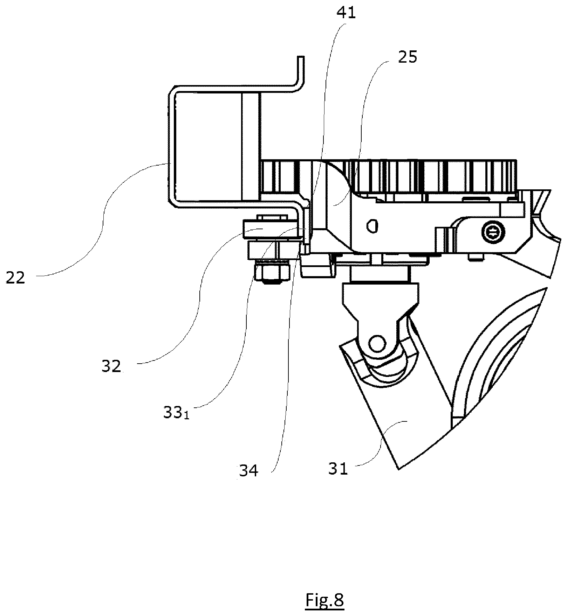

Dans cette position de blocage, le bras 25 avant gauche du robot 21 s'étant incliné vers le bas, le patin 34 est venu en appui sur la face tournée vers l'allée 41 du bord rabattu 33₁ d'une aile du montant 22 et grâce au frottement du patin 34 sur le bord 33₁ la progression du bras 25 vers le bas a été stoppée, comme on peut voir sur les figures 6 et 8, qui sont respectivement des vues détaillées de côté et de dessus de la zone du bras avant gauche.

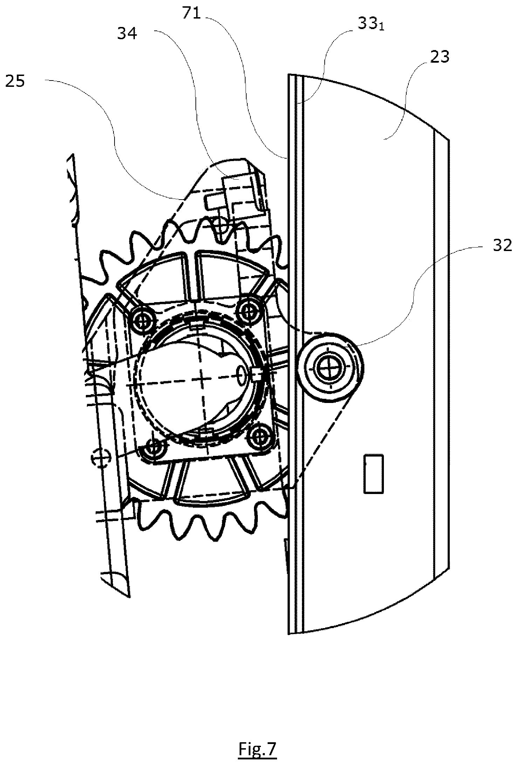

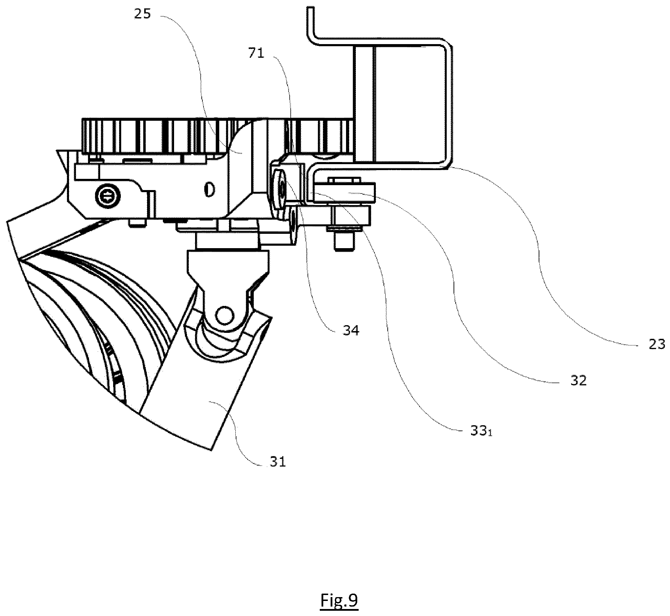

Du coté avant droit du robot, le patin 34 est quant à lui toujours distant de la face 71 du bord 33₁ de l'aile 33 du montant 23 (voir les figures 7 et 9 qui sont respectivement des vues détaillées de côté et de dessus de la zone du bras avant droit).

Il convient de noter que grâce à la mise en œuvre des patins 34, les contre-roues 32 n'exercent pas de cisaillement sur les bords des ailes du montant 22 ou du montant 23, ce qui permet d'éviter une déformation de ces derniers et donc de devoir intervenir pour remplacer ces montants en cas de casse d'un bras d'entrainement d'une roue dentée du chariot.

## Revendications

1. Système de préparation de commandes ou un système de stockage tampon, comprenant :
- un premier rayonnage (14) et un deuxième rayonnage (14), ledit premier rayonnage et ledit deuxième rayonnage délimitant une allée (18) ;
- une première paire de montants (22) solidarisée audit premier rayonnage et une deuxième paire de montants (23) solidarisée audit deuxième rayonnage, les montants de ladite première paire de montants (22) étant montés chacun en vis-à-vis d'un montant de ladite deuxième paire de montants (23) ;
- au moins un chariot à guidage automatique (21) destiné à prélever des objets dans au moins un desdits rayonnages (14), ledit chariot (21) comprenant des moyens de grimpe motorisés aptes à coopérer avec lesdits montants (22,23) de sorte à permettre audit chariot (21) de s'élever le long desdits montants (22,23), lesdits moyens de grimpe comprenant quatre roues dentées (24) destinées chacune à coopérer avec des crémaillères (26) ou des chaînes solidarisées auxdits montants de ladite première paire (22) et de ladite deuxième paire (23) de montants, chacune des roues dentées (24) étant montée sur un support mobile par rapport au châssis dudit chariot (21) entre deux positions :
- une position déployée, dans laquelle au moins une partie de ladite roue dentée (24) montée sur ledit support fait saillie hors dudit châssis ;
- une position escamotée, dans laquelle la roue dentée (24) montée sur ledit support est logée dans ou au-dessus dudit châssis,
ledit chariot comprenant des moyens d'entrainement en rotation desdites roues dentées,
lesdits supports mobiles comprenant des moyens de solidarisation avec lesdits montants (22,23) comprenant une contre-roue (32) montée sur chacun desdits supports, chacune desdites contre-roues (32) étant destinée à rouler sur une face d'un desdits montants (22,23) opposée à la face desdits montants à laquelle est solidarisée ladite crémaillère (26) ou ladite chaine,
**caractérisé en ce qu'**un patin (34) est fixé sensiblement à une extrémité distale de chacun desdits supports, lesdits patins (34) s'étendant sensiblement verticalement , et **en ce que** ledit patin (34) et ladite contre-roue (32) d'un même support mobile sont positionnés l'un par rapport à l'autre sur ledit support de sorte que lorsque lesdits moyens d'entrainement engrènent la roue dentée (24) montée sur ce même support mobile avec la crémaillère (26) ou la chaîne d'un desdits montants (22,33), ladite contre-roue (32) est en contact avec ladite face opposée de ce montant (22,23) et ledit patin (34) est écarté de ce montant et que lorsque ledit chariot (21) est grimpé sur lesdits montants et que ladite roue dentée (24) peut tourner librement suite à une défaillance desdits moyens d'entrainement, entrainant un affaissement dudit support mobile, ledit patin (34) vient en appui sur une portion de la face dudit montant à laquelle est solidarisée une crémaillère (26) ou une chaine de sorte à stopper la progression vers le bas dudit support mobile.

2. Système selon la revendication 1, **caractérisé en ce que** lesdits patins (34) sont montés sur lesdits supports à une hauteur supérieure à celle desdites contre-roues (32).

3. Système selon l'une quelconque des revendications 1 et 2, **caractérisé en ce que** lorsque lesdits moyens d'entrainement engrènent une roue dentée (24) montée sur un support mobile avec la crémaillère (26) ou la chaîne d'un desdits montants, la distance projetée sur l'horizontale entre la surface extérieure du patin (34) fixé sur le même support mobile et l'axe la contre-roue (32) montée sur le même mobile est supérieure au cumul de la valeur du rayon de la contre-roue (32) et de l'épaisseur d'une aile (33) de ce montant.

4. Système selon l'une quelconque des revendications 1 à 3, **caractérisé en ce que** lesdits patins (34) comprennent un bloc en matière élastomère, et de préférence en polyuréthane.

5. Système selon la revendication 4, **caractérisé en ce que** ledit bloc est logé dans une bague.

6. Système selon l'une quelconque des revendications 1 à 5, **caractérisé en ce que** la largeur ou la longueur dudit chariot (21) est inférieure à l'espacement entre les montants de ladite première paire de montant (22) ou de ladite deuxième paire de montants (23), et **en ce que** ledit support mobile est configuré de sorte que, dans ladite position déployée, au moins une partie de chacune desdites roues dentées (24) fait également saillie hors d'un bord dudit châssis faisant face à ladite allée.

7. Système selon la revendication 6, **caractérisé en ce que**, lorsque ledit chariot (21) est engagé dans ladite allée (18), les axes desdites roues dentées (24) sont parallèles à l'axe de ladite allée (18).

8. Système selon l'une quelconque des revendications 1 à 7, **caractérisé en ce que** lesdits supports mobiles sont montés pivotants et/ou coulissants par rapport audit châssis.

9. Système selon l'une quelconque des revendications 1 à 8, **caractérisé en ce que** lesdits supports mobiles sont montés sensiblement aux quatre coins du châssis dudit chariot (21).

10. Système selon l'une quelconque des revendications 1 à 9, **caractérisé en ce que** lesdits moyens d'entrainement comprennent quatre moteurs indépendants destinés chacun à entraîner une desdites roues dentées (24).

11. Système selon l'une quelconque des revendications 1 à 10, **caractérisé en ce que** chacune des crémaillères (26) ou des chaines solidarisées à un desdits montants (22,23) s'étend sous ce montant sensiblement jusqu'au sol et **en ce qu'**un élément de guidage (27) présentant une surface de roulage pour une desdites contre-roues (32) s'étend verticalement le long de la portion inférieure de ladite crémaillère (26) ou de ladite chaine sensiblement du sol jusqu'à hauteur de la base du montant (22,23).

12. Système selon l'une quelconque des revendications 1 à 11, **caractérisé en ce que** lesdits patins sont tournés vers l'extérieur dudit chariot (21).

13. Système selon l'une quelconque des revendications 1 à 12, **caractérisé en ce que** lesdits montants de ladite première paire (22) et de ladite deuxième paire (23) de montants présentent un profil en oméga, ou un profil de cornière, dont au moins une aile (33) présente un bord rabattu (33₁), **en ce que** chacun desdits patins est tourné en direction d'un montant desdits rayonnages (14) lorsque ledit chariot est engagé dans ladite allée (18), et **en ce que** la portion de la face dudit montant à laquelle est solidarisée une crémaillère (26) ou une chaine et sur laquelle un patin peut venir en appui est une portion de la face tournée vers ladite allée (18) d'un bord rabattu (33₁) d'un montant.

## Patentansprüche

1. Auftragsabwicklungssystem oder Pufferspeichersystem, umfassend:
- ein erstes Regal (14) und ein zweites Regal (14), wobei das erste Regal und das zweite Regal einen Gang (18) begrenzen;
- ein erstes Paar Träger (22), die mit dem ersten Regal verbunden sind, und ein zweites Paar Träger (23), die mit dem zweiten Regal verbunden sind, wobei die Träger des ersten Paares Träger (22) jeweils gegenüber einem Träger des zweiten Paares Träger (23) angebracht sind;
- wenigstens einen selbstfahrenden Wagen (21) zum Entnehmen von Gegenständen aus wenigstens einem der Regale (14), wobei der Wagen (21) motorisierte Klettermittel umfasst, die mit den Trägern (22, 23) zusammenwirken können, so dass sich der Wagen (21) entlang der Träger (22, 23) anheben kann, wobei die Klettermittel vier Zahnräder (24) umfassen, die jeweils dazu bestimmt sind, mit Zahnstangen (26) oder Ketten zusammenzuwirken, die mit den Trägern des ersten Paares (22) und des zweiten Paares (23) von Trägern verbunden sind, wobei jedes der Zahnräder (24) auf einer gegenüber dem Rahmen des Wagens (21) beweglichen Halterung zwischen zwei Positionen montiert ist:
- einer ausgefahrenen Position, in der wenigstens ein Teil des auf der Halterung montierten Zahnrades (24) aus dem Rahmen herausragt;
- einer eingefahrenen Position, in der das auf dem Träger montierte Zahnrad (24) in oder über dem Rahmen aufgenommen ist,
wobei der Wagen Mittel zum Drehantrieb der Zahnräder umfasst,
wobei die beweglichen Halterungen Mittel zum Verbinden mit den Trägern (22, 23) aufweisen, umfassend ein Gegenrad (32), das an jedem der Halterungen befestigt ist, wobei jedes der Gegenräder (32) dazu bestimmt ist, auf einer Fläche eines der Träger (22, 23) zu rollen, die der Fläche der Träger gegenüberliegt, an der die Zahnstange (26) oder die Kette befestigt ist,
**dadurch gekennzeichnet, dass** ein Gleitelement (34) im Wesentlichen an einem distalen Ende jeder der Halterungen befestigt ist, wobei sich die Gleitelemente (34) im Wesentlichen vertikal erstrecken,
und dass das Gleitelement (34) und das Gegenrad (32) derselben beweglichen Halterung so zueinander auf der Halterungen positioniert sind, dass, wenn die Antriebsmittel in das auf dieser beweglichen Halterung montierte Zahnrad (24) mit der Zahnstange (26) oder der Kette eines der Träger (22, 33) eingreifen, das Gegenrad (32) mit der gegenüberliegenden Seite dieses Trägers (22, 23) in Kontakt steht und das Gleitelement (34) von diesem Träger beabstandet ist, und dass, wenn der Wagen (21) auf die Träger geklettert ist und das Zahnrad (24) aufgrund eines Ausfalls der Antriebsmittel frei drehen kann, was zu einem Absinken der beweglichen Halterung führt, das Gleitelement (34) an einem Abschnitt der Fläche des Trägers in Anlage kommt, an dem eine Zahnstange (26) oder eine Kette befestigt ist, um die Abwärtsbewegung der beweglichen Halterung zu stoppen.

2. System nach Anspruch 1, **dadurch gekennzeichnet, dass** die Gleitelemente (34) an den Halterungen in einer Höhe angebracht sind, die höher ist als die der Gegenräder (32).

3. System nach einem der Ansprüche 1 und 2, **dadurch gekennzeichnet, dass**, wenn die Antriebsmittel in ein Zahnrad (24) eingreifen, das an einer beweglichen Halterung mit der Zahnstange (26) oder der Kette eines der Träger angebracht ist, der horizontale Abstand zwischen der Außenfläche des an derselben beweglichen Halterung befestigten Gleitelements (34) und der Achse des an derselben beweglichen Halterungen montierten Gegenrads (32) größer ist als die Summe der Werte des Radius des Gegenrads (32) und der Dicke eines Flügels (33) dieses Trägers.

4. System nach einem der Ansprüche 1 bis 3, **dadurch gekennzeichnet, dass** die genannten Gleitelemente (34) einen Block aus elastomerem Material, vorzugsweise aus Polyurethan, umfassen.

5. System nach Anspruch 4, **dadurch gekennzeichnet, dass** der Block in einem Ring aufgenommen ist.

6. System nach einem der Ansprüche 1 bis 5, **dadurch gekennzeichnet, dass** die Breite oder Länge des Wagens (21) kleiner ist als der Abstand zwischen den Trägern des ersten Trägerpaares (22) oder des zweiten Trägerpaares (23) und dass die bewegliche Halterung so ausgebildet ist, dass in der ausgefahrenen Position wenigstens ein Teil jedes der Zahnräder (24) ebenfalls über den Rand des Rahmens herausragt, die dem Gang zugewandt ist.

7. System nach Anspruch 6, **dadurch gekennzeichnet, dass**, wenn der Wagen (21) in den Gang (18) eingefahren ist, die Achsen der Zahnräder (24) parallel zur Achse des Gangs (18) sind.

8. System nach einem der Ansprüche 1 bis 7, **dadurch gekennzeichnet, dass** die beweglichen Halterungen schwenkbar und/oder verschiebbar in Bezug auf den Rahmen angebracht sind.

9. System nach einem der Ansprüche 1 bis 8, **dadurch gekennzeichnet, dass** die beweglichen Halterungen im Wesentlichen an den vier Ecken des Rahmens des Wagens (21) angebracht sind.

10. System nach einem der Ansprüche 1 bis 9, **dadurch gekennzeichnet, dass** die Antriebsmittel vier unabhängige Motoren umfassen, die jeweils dazu bestimmt sind, eines der Zahnräder (24) anzutreiben.

11. System nach einem der Ansprüche 1 bis 10, **dadurch gekennzeichnet, dass** sich jede der Zahnstangen (26) oder Ketten, die mit einem der Träger (22, 23) verbunden sind, unter diesem Träger im Wesentlichen bis zum Boden erstreckt und dass sich ein Führungselement (27) mit einer Lauffläche für eines der Gegenräder (32) vertikal entlang des unteren Abschnitts der Zahnstange (26) oder der Kette im Wesentlichen vom Boden bis zur Höhe der Basis des Trägers (22, 23) erstreckt.

12. System nach einem der Ansprüche 1 bis 11, **dadurch gekennzeichnet, dass** die Gleitelemente vom Wagen (21) nach außen gedreht sind.

13. System nach einem der Ansprüche 1 bis 12, **dadurch gekennzeichnet, dass** die Träger des ersten Paares (22) und des zweiten Paares (23) von Trägern ein Omega-Profil oder ein Winkelprofil aufweisen, von dem wenigstens ein Schenkel (33) einen umgebogenen Rand (33₁) aufweist, dass jedes der Gleitelemente in Richtung eines Trägers der Regale (14) gedreht ist, wenn der Wagen in den Gang (18) eingefahren ist, und dass der Abschnitt der Fläche des Trägers, an dem eine Zahnstange (26) oder eine Kette befestigt ist und auf dem ein Gleitelement aufliegen kann, ein Abschnitt der dem Gang (18) zugewandten Fläche eines umgebogenen Rands (331) eines Trägers ist.

## Claims

1. An order preparation system or a buffer stock system, comprising:
- a first shelving unit (14) and a second shelving unit (14), said first shelving unit and said second shelving unit delimiting an aisle (18);
- a first pair of uprights (22) secured to said first shelving unit and a second pair of uprights (23) secured to said second shelving unit, the uprights of said first pair of uprights (22) being each mounted facing an upright of said second pair of uprights (23);
- at least one automatic guided vehicle (21) intended to take objects from at least one of said shelving units (14), said vehicle (21) comprising motorized climbing means capable of cooperating with said uprights (22, 23) so as to allow said vehicle (21) to rise along said uprights (22, 23), said climbing means comprising four toothed wheels (24) each intended to cooperate with racks (26) or chains secured to said uprights of said first pair (22) and of said second pair (23) of uprights, each of the toothed wheels (24) being mounted on a support that is movable with respect to the frame of said vehicle (21) between two positions:
- a deployed position, in which at least a part of said toothed wheel (24) mounted on said support protrudes out from said frame;
- a retracted position, in which the toothed wheel (24) mounted on said support is housed in or on top of said frame,
said vehicle comprising means for driving said toothed wheels in rotation, said movable supports comprising means for securing with said uprights (22, 23) comprising a counter-wheel (32) mounted on each of said supports, each of said counter-wheels (32) being intended to roll on a face of one of said uprights (22, 23) opposite the face of said uprights to which said rack (26) or said chain is secured,
**characterized in that** a runner (34) is fixed substantially at a distal end of each of said supports, said runners (34) extending substantially vertically,
and **in that** said runner (34) and said counter-wheel (32) of a same movable support are positioned with respect to one another on said support such that, when said driving means mesh the toothed wheel (24) mounted on this same movable support with the rack (26) or the chain of one of said uprights (22, 23), said counter-wheel (32) is in contact with said opposite face of this upright (22, 23) and said runner (34) is separated from this upright and that, when said vehicle (21) has climbed on said uprights and said toothed wheel (24) can rotate freely following a failure of said driving means, leading to a sagging of said movable support, said runner (34) comes to bear on a portion of the face of said upright to which a rack (26) or a chain is secured so as to stop the downward advance of said movable support.

2. The system as claimed in claim 1, **characterized in that** said runners (34) are mounted on said supports at a height greater than that of said counter-wheels (32).

3. The system as claimed in either one of claims 1 and 2, **characterized in that**, when said driving means mesh a toothed wheel (24) mounted on a movable support with the rack (26) or the chain of one of said uprights, the distance projected on the horizontal between the outer surface of the runner (34) fixed onto the same movable support and the axis of the counter-wheel (32) mounted on the same movable support is greater than the aggregate of the value of the radius of the counter-wheel (32) and of the thickness of a flange (33) of this upright.

4. The system as claimed in any one of claims 1 to 3, **characterized in that** said runners (34) comprise a block made of elastomer material, and preferably made of polyurethane.

5. The system as claimed in claim 4, **characterized in that** said block is housed in a ring.

6. The system as claimed in any one of claims 1 to 5, **characterized in that** the width or the length of said vehicle (21) is less than the spacing between the uprights of said first pair of uprights (22) or of said second pair of uprights (23), and **in that** said movable support is configured such that, in said deployed position, at least a part of each of said toothed wheels (24) also protrudes out from an edge of said frame facing said aisle.

7. The system as claimed in claim 6, **characterized in that**, when said vehicle (21) is engaged in said aisle (18), the axes of said toothed wheels (24) are parallel to the axis of said aisle (18).

8. The system as claimed in any one of claims 1 to 7, **characterized in that** said movable supports are mounted to pivot and/or slide with respect to said frame.

9. The system as claimed in any one of claims 1 to 8, **characterized in that** said movable supports are mounted substantially at the four corners of the frame of said vehicle (21).

10. The system as claimed in any one of claims 1 to 9, **characterized in that** said driving means comprise four independent motors each intended to drive one of said toothed wheels (24).

11. The system as claimed in any one of claims 1 to 10, **characterized in that** each of the racks (26) or of the chains secured to one of said uprights (22, 23) extends under this upright substantially to the ground and **in that** a guiding element (27) having a rolling surface for one of said counter-wheels (32) extends vertically along the lower portion of said rack (26) or of said chain, substantially from the ground to the height of the base of the upright (22, 23).

12. The system as claimed in any one of claims 1 to 11, **characterized in that** said runners are turned toward the outside of said vehicle (21).

13. The system as claimed in any one of claims 1 to 12, **characterized in that** said uprights of said first pair (22) and of said second pair (23) of uprights have an omega, or angle-iron, profile, of which at least one flange (33) has a folded-down edge (33ᵢ), and **in that** each of said runners is turned toward an upright of said shelving units (14) when said vehicle is engaged in said aisle (18),and **in that** the portion of the face of said upright to which a rack (26) or a chain is secured and on which a runner can come to bear is a portion of the face turned toward said aisle (18) of a folded-down edge (33ᵢ) of an upright.
